# FASCICULE DE BREVET EUROPEEN

(11) **EP 3 473 806 B1**
(45) Date de publication et mention de la délivrance du brevet: **13.05.2020**
(21) Numéro de dépôt: 18201699.8
(22) Date de dépôt: 22.10.2018
(51) Int. Cl.: F01D 5/14, F01D 5/28, F01D 9/04, F01D 11/08, F01D 25/24, F01D 25/28, F01D 11/00

(54) **CARTER POUR TURBOMACHINE COMPRENANT UNE PORTION CENTRALE EN SAILLIE RELATIVEMENT À DEUX PORTIONS LATÉRALES DANS UNE RÉGION DE JONCTION**
GEHÄUSE FÜR EIN TURBOTRIEBWERK, DAS EINEN ZENTRALEN ABSCHNITT UMFASST, DER RELATIV ZU ZWEI SEITENABSCHNITTEN IM BEREICH EINER VERBINDUNG HERVORRAGT
TURBINE ENGINE CASING COMPRISING A CENTRAL PORTION PROJECTING RELATIVE TO TWO SIDE PORTIONS IN A JOINING REGION

(30) Priorité: 23.10.2017 FR 1759986
(43) Date de publication de la demande: 24.04.2019
(73) Titulaire: SAFRAN AIRCRAFT ENGINES, 75015 Paris (FR)
(72) Inventeur: TABLEAU, Nicolas Paul, 77550 MOISSY-CRAMAYEL (FR); CONGRATEL, Sébastien Serge Francis, 77550 MOISSY-CRAMAYEL (FR); DANIS, Antoine Claude Michel Etienne, 77550 MOISSY-CRAMAYEL (FR); JUDET, Maurice Guy, 77550 MOISSY-CRAMAYEL (FR); QUENNEHEN, Lucien Henri Jacques, 77550 MOISSY-CRAMAYEL (FR)
(74) Mandataire: Brevalex

(56) Documents cités:
- WO-A1-2016/146942
- FR-A1- 2 919 345
- FR-A1- 3 036 433
- US-A1- 2017 101 882

## Description

### DOMAINE TECHNIQUE

L'invention se rapporte au domaine technique des turbomachines d'aéronef telles que les turboréacteurs et les turbopropulseurs. Plus précisément, l'invention concerne les carters de turbine haute pression pour turbomachine.

### ÉTAT DE LA TECHNIQUE ANTÉRIEURE

Chaque étage d'une turbine haute pression pour turbomachine comprend une roue d'aubes mobiles et un distributeur doté d'aubes fixes. La roue est mobile en rotation relativement au distributeur autour de l'axe longitudinal de la turbomachine et à l'intérieur d'un anneau sectorisé.

Cet anneau sectorisé est fixé à un carter de support qui est relié mécaniquement au distributeur. Le carter de support comprend un corps annulaire. Il comporte un rebord amont et un rebord aval entre lesquels sont fixés les secteurs d'anneau.

Les secteurs d'anneaux sont réalisés de manière connue en matériau composite à matrice céramique, tandis que le carter de support est réalisé en matériau métallique. Le matériau constitutif des secteurs d'anneaux présente un coefficient de dilatation différentiel supérieur à celui du matériau constitutif du carter de support. Un tel carter de support et de tels secteurs anneaux sont par exemple connus du brevet FR 3 041 993 et de la demande internationale WO 2016 /146942 A1.

Du fait de cette différence de matériau, les dilatations différentielles des secteurs d'anneau relativement au carter de support sont importantes, ce qui a tendance à provoquer des fuites. Les secteurs d'anneaux présentent aussi une grande rigidité et une faible résistance mécanique par rapport au carter de support.

Or, les secteurs d'anneaux sont serrés avec une contrainte à froid au carter de support pour, qu'en fonctionnement de la turbomachine, les fuites entre les secteurs d'anneaux et le carter de support soient limitées, malgré les dilatations différentielles. Les efforts mécaniques transmis par le carter de support aux secteurs d'anneaux peuvent donc être très élevés.

Il existe donc un besoin de limiter les efforts mécaniques transmis par le carter de support aux secteurs d'anneau, tout en limitant les fuites d'air entre les secteurs d'anneaux et le carter de support.

### EXPOSÉ DE L'INVENTION

L'invention vise à résoudre au moins partiellement les problèmes rencontrés dans les solutions de l'art antérieur.

A cet égard, l'invention a pour objet un carter de support pour secteur d'anneau de turbomachine selon la revendication 1.

Le carter de support comprend un corps annulaire autour d'un axe longitudinal du carter, et un rebord aval de fixation du secteur d'anneau.

Le rebord aval s'étend depuis le corps radialement vers l'intérieur du carter et circonférentiellement le long d'une région de jonction du corps à un distributeur.

La région de jonction comprend une première région de raccordement configurée pour raccorder le corps au rebord aval et une deuxième région de raccordement configurée pour être fixée au distributeur.

Selon l'invention, la première région de raccordement comprend, selon une direction circonférentielle du carter relativement à son axe longitudinal, une portion centrale et deux portions latérales qui sont situées de part et d'autre de la portion centrale. La portion centrale est en saillie radialement vers l'extérieur du carter par rapport aux portions latérales.

Grâce au carter de support selon l'invention, l'intensité des efforts mécaniques exercés par le carter de support sur le secteur d'anneau est réduite, tout en limitant les fuites d'air à la jonction entre le secteur d'anneau et le carter de support, et tout en limitant la masse de la turbomachine.

En particulier, le carter de support selon l'invention présente une rigidité réduite au niveau des portions latérales par rapport à la rigidité du carter au niveau de la portion centrale, ce qui conduit à une répartition plus uniforme des efforts mécaniques transmis par le carter de support au secteur d'anneau. Le contact mécanique amélioré du carter de support et du secteur d'anneau lors du fonctionnement du module permet également de réduire les fuites entre le carter de support et le secteur d'anneau.

La portion centrale s'étend notamment depuis une surface axiale externe du corps en étant en saillie radialement vers l'extérieur par rapport aux portions latérales.

L'invention peut comporter de manière facultative une ou plusieurs des caractéristiques suivantes combinées entre elles ou non.

Avantageusement, au moins une des portions latérales comprend un évidement d'une surface externe du corps.

Selon une particularité de réalisation, la portion centrale comprend une portion en saillie de la surface externe du corps. De préférence, la portion en saillie comprend un bossage. Un bossage est de préférence prévu pour chacun des secteurs d'anneau d'étanchéité.

Selon une forme de réalisation avantageuse, le carter de support comprend un rebord amont de fixation du secteur d'anneau, le rebord amont s'étendant depuis le corps radialement vers l'intérieur du carter et circonférentiellement le long du corps.

Selon une autre forme de réalisation avantageuse, la deuxième région de raccordement comprend un bord aval de fixation qui est situé en aval de la portion centrale et des portions latérales, pour fixer le carter au distributeur.

Selon une particularité de réalisation, la hauteur maximale de saillie de la portion centrale par rapport à au moins une des portions latérales est comprise entre 3 mm et 30 mm.

Selon une autre particularité de réalisation la longueur circonférentielle de la portion centrale par rapport à la longueur circonférentielle d'un secteur d'anneau est comprise entre 1/5 et 4/5.

En particulier, la longueur circonférentielle du bossage de la portion centrale par rapport à la longueur circonférentielle du secteur d'anneau est comprise entre 1/5 et 4/5.

Selon une autre particularité de réalisation la longueur circonférentielle d'au moins une des portions latérales par rapport à la longueur circonférentielle d'un secteur d'anneau est comprise entre 1/10 et 2/5.

Avantageusement, la région de jonction est sensiblement symétrique par rapport à un plan médian de coupe longitudinale du carter de support.

De préférence, le carter de support est sensiblement symétrique par rapport au plan médian.

Selon une particularité de réalisation, le rebord aval comprend une lèvre destinée à être en contact avec une patte aval du secteur d'anneau.

L'invention porte également sur un ensemble d'anneau de turbine comprenant un carter tel que défini ci-dessus et un secteur d'anneau qui est fixé au carter selon la revendication 8.

Le secteur d'anneau comprend une patte amont qui est fixée au rebord amont du carter de support et une patte aval qui est fixée au rebord aval, de préférence par des pions.

De préférence, le carter de support est réalisé dans un matériau métallique.

De préférence, le secteur d'anneau est réalisé dans un matériau composite à matrice céramique.

Selon une particularité de réalisation, l'ensemble d'anneau comprend une pluralité de secteurs d'anneaux adjacents les uns des autres selon la direction circonférentielle et fixés au carter de support.

La première région de raccordement comprend notamment selon la direction circonférentielle autant de portions centrales que l'ensemble comprend de secteurs d'anneau. Chaque portion centrale est située circonférentiellement entre deux portions latérales. Chaque portion centrale est en saillie radialement vers l'extérieur du carter par rapport aux portions latérales qui sont adjacentes à cette portion centrale.

L'invention se rapporte aussi à une turbine pour turbomachine, comprenant un ensemble d'anneaux tel que défini ci-dessus.

De préférence, la turbine est une turbine haute pression.

De préférence, un distributeur haute pression est fixé mécaniquement au carter de support, en amont du secteur d'anneau.

Enfin, l'invention se rapporte à une turbomachine comprenant une turbine telle que décrite ci-dessus.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation schématique partielle en coupe longitudinale d'une turbomachine, selon un premier mode de réalisation de l'invention ;
- la figure 2 est une représentation schématique partielle en coupe longitudinale d'une turbine haute pression de la turbomachine selon le premier mode de réalisation ;
- la figure 3 est une représentation schématique partielle d'une structure de support d'anneau de turbine haute pression selon le premier mode de réalisation ;
- la figure 4 est une représentation schématique partielle en perspective d'une portion angulaire de carter de support de la turbine haute pression de la turbomachine selon le premier mode de réalisation.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

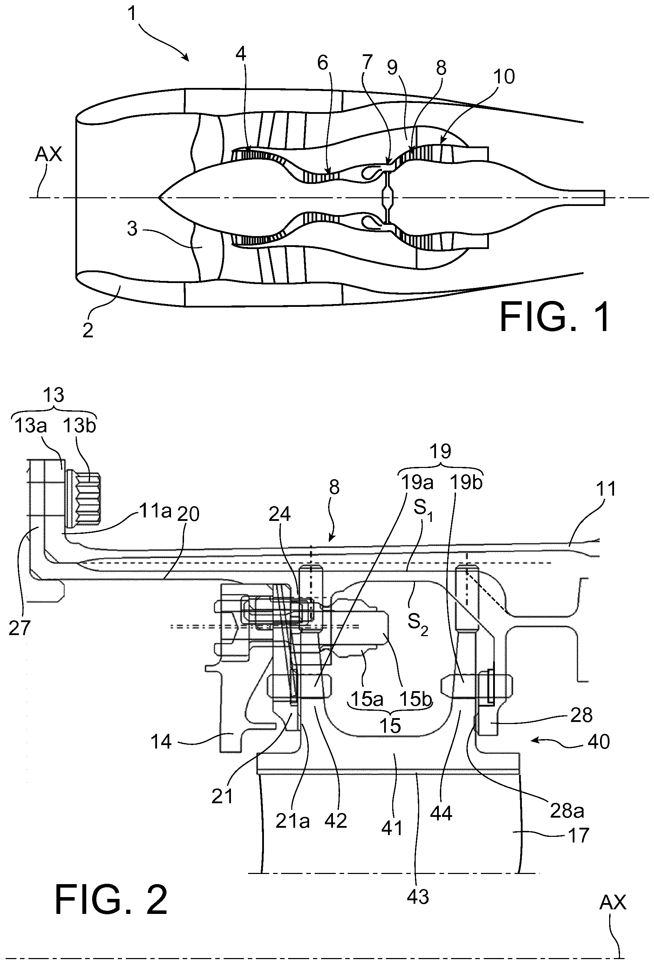

La figure 1 représente une turbomachine 1 à double flux et double corps. La turbomachine 1 est un turboréacteur qui a une forme de révolution autour d'un axe longitudinal AX.

La turbomachine 1 comprend, de l'amont vers l'aval sur le chemin d'un flux primaire, une manche d'entrée d'air 2, une soufflante 3, un compresseur basse pression 4, un compresseur haute pression 6, une chambre de combustion 7, une turbine haute pression 8 et une turbine basse pression 10.

Les directions amont et aval sont utilisés dans ce document en référence à l'écoulement global des gaz dans la turbomachine 1, une telle direction est sensiblement parallèle à la direction de l'axe longitudinal AX.

Le compresseur basse pression 4, le compresseur haute pression 6, la turbine haute pression 8 et la turbine basse pression 10 délimitent une veine primaire d'écoulement du flux primaire. Ils sont entourés par une veine secondaire de la turbomachine 1.

Le compresseur haute pression 6 et la turbine haute pression 8 sont reliées mécaniquement par un arbre d'entraînement du compresseur haute pression 6, pour former un corps haute pression de la turbomachine 1. De manière similaire, le compresseur basse pression 4 et la turbine basse pression 10 sont reliées mécaniquement par un arbre de turbomachine, de façon à former un corps basse pression de la turbomachine 1.

Le compresseur basse pression 4, le compresseur haute pression 6, la chambre de combustion 7, la turbine haute pression 8 et la turbine basse pression 10 sont entourés par un carter 9 qui s'étend depuis la manche d'entrée 2 jusqu'à la turbine basse pression 10.

La figure 2 représente partiellement un étage de la turbine haute pression 8. Chaque étage ou l'étage de turbine haute pression comprend une roue d'aubes mobiles et un distributeur (non représenté).

Le distributeur fait partie du stator de la turbomachine. Il est divisé en secteurs annulaires qui comprennent chacun des aubes fixes espacées les unes des autres autour de l'axe longitudinal AX.

La roue est mobile en rotation autour de l'axe longitudinal AX de la turbomachine, à l'intérieur de secteurs d'anneau 40 dont un seul est représenté à la figure 2. Ces secteurs d'anneaux 40 sont espacés les uns des autres autour d'une direction circonférentielle C-C et ils sont fixés à un carter de support 20 par l'intermédiaire d'un flasque amont 21.

L'étage de turbine comprend un carter de turbine 11, le carter de support 20, un flasque d'accrochage 14 de distributeur et le flasque amont 21 qui est sectorisé. Le carter de support 20, le flasque d'accrochage 14 et le flasque amont 21 forment conjointement une structure de support des secteurs d'anneaux 40.

Chaque secteur d'anneau 40 présente une forme générale de pi renversé en section longitudinale. Les secteurs d'anneau 40 sont réalisés dans un matériau composite à matrice céramique, ce qui leur confère une résistance thermique importante au flux d'air chaud dans la veine de la turbine haute pression 8.

Chaque secteur d'anneau 40 comprend une base annulaire 41, une patte amont 42 et une patte aval 44. La base annulaire 41 porte une couche de matériau abradable 43 qui délimite la surface inférieure du secteur d'anneau. La couche de matériau abradable 43 est destinée à venir au contact du sommet des aubes mobiles 17 correspondantes. Elle sert à assurer une étanchéité entre ces aubes 17 et le secteur d'anneau 40.

La patte amont 42 est fixée au flasque amont 21 par des attaches amont 19a dont une seule est représentée à la figure 2. La patte aval 44 est fixée à un rebord aval 28 du carter de support 20 par des attaches aval 19b dont une seule est représentée à la figure 2.

Les attaches amont 19a et les attaches aval 19b sont des pions qui engagent les pattes 42, 44 pour limiter le déplacement radial du secteur d'anneau 40 relativement aux aubes mobiles 17. Elles forment conjointement des moyens de fixation 19 du secteur d'anneau 40 au carter de support 20.

Le carter de turbine 11 est un carter délimitant l'extérieur de la turbine haute pression 8. Il est raccordé mécaniquement à un carter de chambre de combustion par un organe de fixation amont 13.

Cet organe de fixation amont 13 comprend de manière classique une vis 13a et un écrou 13b. Il raccorde un bord amont 11a du carter de turbine 11 à un bord amont 27 du carter de support 20. Le bord amont 27 de carter de support est raccordé à un bord aval de carter de chambre de combustion par l'organe de fixation 13.

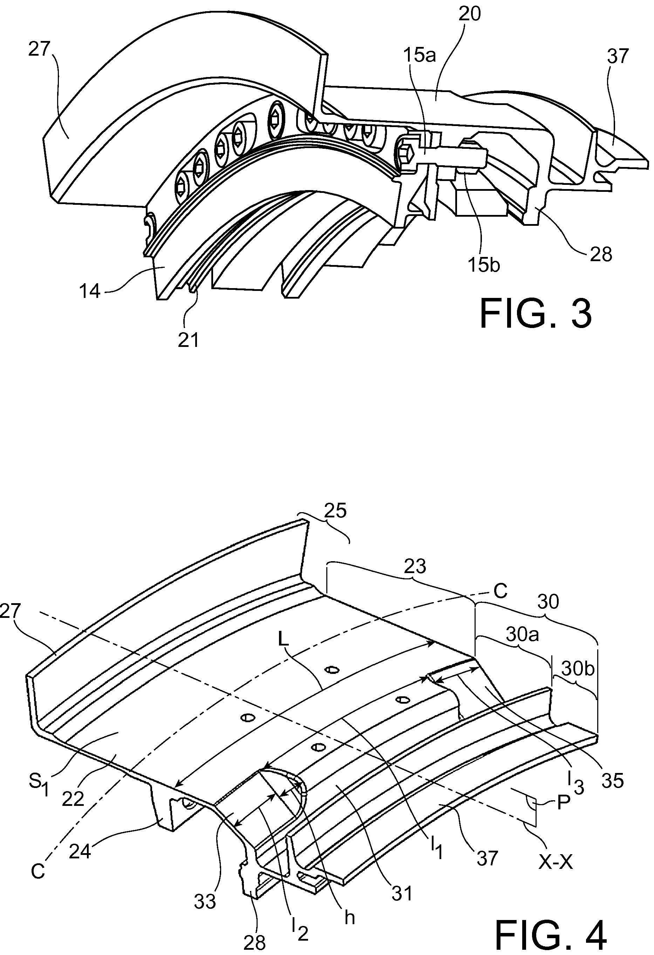

La structure de support de secteurs d'anneaux est décrite ci-dessous en référence conjointe aux figures 2 et 3.

Le flasque d'accrochage 14 est configuré pour permettre l'accrochage d'un distributeur amont. Il sert de butée axiale au distributeur amont. Il est conçu pour transmettre des efforts mécaniques du distributeur amont au carter de support 20, en limitant les efforts mécaniques exercés par ce distributeur amont sur les secteurs d'anneaux 40. Il s'agit donc d'un flasque de reprise d'effort du distributeur amont. Le flasque 14 est raccordé mécaniquement au carter de support 20 et au flasque amont 21 par un organe de fixation 15.

L'organe de fixation 15 du flasque d'accrochage comprend de manière classique une vis 15a et un organe de serrage 15b comprenant un écrou. Il raccorde une face aval du flasque de d'accrochage au flasque amont 21 et au rebord amont 24 du carter de support.

Le flasque amont 21 s'étend axialement entre le flasque d'accrochage 14 et un rebord amont 24 du carter de support 20. Il est divisé en secteurs adjacents selon la longueur circonférentielle C-C. Il s'étend sur sensiblement toute la longueur circonférentielle C-C du carter.

Le flasque amont 21 comprend une lèvre 21a conçue pour former un appui rectiligne contre la patte amont 42 du secteur d'anneau, pour limiter les fuites entre le flasque amont 21 et le secteur d'anneau 40. Le flasque amont 21 sert à fixer la patte amont 42 du secteur d'anneau 40 au carter de support 20 au moyen des pions 19a. En étant sectorisé, le flasque amont 21 permet de limiter les efforts mécaniques du carter de support 20 sur la patte amont 42 de chaque secteur d'anneau 40.

En référence conjointe aux figures 2 à 4, le carter de support 20 est symétrique par rapport à un plan médian P de coupe longitudinale du carter de support. Il s'étend le long d'une direction longitudinale X-X dans ce plan qui est sensiblement parallèle à celle de l'axe longitudinal de la turbomachine AX. Le carter de support 20 est partiellement annulaire autour de son axe longitudinal X-X, en s'étendant également selon une direction circonférentielle C-C autour de cet axe.

Les figures 3 et 4 représentent la portion angulaire de carter de support 20 qui est en regard du secteur d'anneau 40 qui est représenté à la figure 2. Le carter de support 20 s'étend sensiblement sur 360° autour de son axe longitudinal X-X et il comporte plusieurs portions angulaires telles que celle représentée à la figure 4.

Sauf précision contraire, les adjectifs « axial », « radial » et « circonférentiel » sont définis par rapport à l'axe de révolution X-X du carter de support 20. Une direction axiale est une direction sensiblement parallèle à l'axe longitudinal X-X du carter de support 20. Une direction radiale est une direction sensiblement orthogonale à l'axe X-X du carter de support 20 et sécante avec l'axe X-X du carter de support 20. Une direction circonférentielle est une direction autour de l'axe longitudinal X-X du carter de support 20.

Le carter de support 20 est réalisé dans un matériau métallique qui présente une plus grande résistance mécanique que le matériau constitutif des secteurs d'anneaux 40, ainsi que des dilatations thermiques plus importantes.

Le carter de support 20 comprend un corps 22, un rebord amont 24 et un rebord aval 28. Il comprend axialement d'amont en aval une région amont 25, une région centrale 23 et une région de jonction 30 qui comprend le rebord aval 28.

La région amont 25 comprend le bord amont 27 de fixation du carter de support 20 au carter de turbine 11. Le bord amont 27 délimite le carter de support 20 axialement vers l'amont. Il est en saillie vers l'extérieur du carter depuis la région centrale 23. Il s'étend sur sensiblement toute la longueur circonférentielle C-C du carter.

La région centrale 23 comprend le corps 22 et le rebord amont 24. Le corps 22 comprend une surface externe S₁ qui est dirigée vers le carter de turbine 11 et une surface interne S₂ qui est dirigée vers les aubes mobiles 17 et qui est opposée à la surface externe S₁. La surface externe S₁ et la surface interne S₂ s'étendent axialement. Elles forment chacune une surface de plat du corps 22. La surface externe Si est radialement opposée à la surface interne S₂.

Le rebord amont 24 s'étend depuis le corps 22 radialement vers l'intérieur du carter 20. Il forme une bride de raccordement du flasque amont 21 au corps 22. Il est raccordé au flasque amont 21 par l'organe de fixation 15.

La région de jonction 30 forme une région aval du carter de support 20. Elle comprend une première région de raccordement 30a, le rebord aval 28 et une deuxième région de raccordement 30b. La région de jonction 30 sert à raccorder le carter de support 20 à un distributeur situé en aval des aubes mobiles 17.

La première région de raccordement 30a est située axialement entre le corps 22 et la deuxième région de raccordement 30b. Elle est configurée pour raccorder le corps 22 au rebord aval 28. Elle comporte une pluralité de bordures circonférentielles chacune associée à un secteur d'anneau 40 qui sont adjacentes les unes aux autres selon la direction circonférentielle C-C et qui ont chacune une longueur circonférentielle égale à celle d'un des secteurs d'anneau 40.

Chaque bordure circonférentielle comporte une portion centrale 31 et deux portions latérales 33, 35 qui sont situées de part et d'autre de la portion centrale 31 selon la direction circonférentielle C-C.

La deuxième région de raccordement 30b est configurée pour raccorder le carter de support 20 au distributeur. Elle comprend un bord aval 37 de fixation qui délimite le carter de support 20 vers l'aval. Le bord aval 37 est en saillie vers l'extérieur du carter depuis la région centrale 23. Il s'étend sur sensiblement toute la longueur circonférentielle C-C du carter. Le bord aval 37 de fixation sert à fixer le carter de support 20 au distributeur qui est situé en aval de la roue d'aubes mobiles 17.

Le rebord aval 28 s'étend depuis le corps 22 radialement vers l'intérieur du carter 20. Il est situé axialement dans une région aval de la bordure circonférentielle 30a. Il s'étend sur sensiblement toute la longueur circonférentielle C-C du carter. Il est monobloc avec le corps 22, pour limiter les fuites d'air entre les secteurs d'anneau 40 et le rebord aval 28.

Le rebord aval 28 comprend une lèvre 28a conçue pour former un appui rectiligne contre la patte aval 44, pour limiter les fuites entre le rebord aval 28 et chaque secteur d'anneau 40, notamment au niveau de la jonction de deux secteurs d'anneau mis circonférentiellement bout à bout. Le rebord aval 28 est un rebord de fixation de la patte aval 44 du secteur d'anneau 40.

Le caractère sectorisé des secteurs d'anneau 40 en regard du rebord aval 28 monobloc tend à accroitre les contraintes mécaniques qui sont exercées par le rebord aval 28 sur les secteurs d'anneaux 40. La distance entre la surface externe S₁ du carter et la lèvre 28a est variable le long de la direction circonférentielle C-C, ce qui tend à faire varier l'intensité des efforts mécaniques exercés par le carter de support 20 circonférentiellement sur les secteurs d'anneau 40. Les contraintes mécaniques exercées par le carter de support 20 tendent alors à être maximales au niveau des extrémités des secteurs d'anneau 40, ce qui est préjudiciable à leur tenue mécanique.

Chaque portion centrale 31 et les portions latérales 33, 35 correspondantes sont conçues pour réduire l'intensité maximale des efforts mécaniques qui sont exercés par le carter de support 20 sur les secteurs d'anneau 40. Elles conduisent à une répartition plus uniforme des efforts mécaniques transmis par le carter de support 20 aux secteurs d'anneau 40 le long de la première région de raccordement 30a.

En référence à la figure 4, la première région de raccordement 30a s'étend sensiblement sur toute la longueur circonférentielle C-C du secteur d'anneau 40 qui est représentée à la figure 2. Elle est située axialement entre le rebord amont 24 et le bord aval de fixation 37.

La portion centrale 31 est en saillie radialement vers l'extérieur par rapport à la surface externe Si du corps 22. Elle forme un bossage du carter de support 20. La rigidité du carter de support 20 est accrue localement au niveau de la portion centrale 31. Cette augmentation locale de rigidité du carter 20 compense le bras de levier plus important entre la surface externe S₁ au niveau de la portion centrale 31 et la lèvre 28a du rebord aval au niveau de la portion centrale 31.

La première portion latérale 33 forme un évidement du carter 20 par rapport à la surface externe S₁ au niveau du corps 22. La rigidité du carter de support 20 est diminuée localement au niveau de la première portion latérale 33. Cette diminution locale de rigidité du carter 20 compense le bras de levier plus faible entre la surface externe Si au niveau de la première portion latérale 33 et la lèvre 28a du rebord aval au niveau de la première portion latérale 33.

La deuxième portion latérale 35 forme aussi un évidement du carter 20 par rapport à la surface externe S₁ au niveau du corps 22. La deuxième portion latérale 35 a sensiblement la même forme que la première portion latérale 33. La rigidité du carter de support 20 est diminuée localement au niveau de la deuxième portion latérale 35. Cette diminution locale de rigidité du carter 20 compense le bras de levier plus faible entre la surface externe S₁ au niveau de la deuxième portion latérale 35 et la lèvre 28a du rebord aval au niveau de la deuxième portion latérale 35.

La hauteur maximale h de la portion centrale 31 par rapport à chacune des portions latérales 33, 35 est comprise entre 3 mm 30 mm.

La longueur circonférentielle I₁ de la portion centrale 31 par rapport à la longueur L de la bordure circonférentielle associée au secteur d'anneau 40 est comprise entre 1/5 et 4/5.

La longueur circonférentielle I₂ de la première portion latérale 33 par rapport à la longueur L de la bordure circonférentielle associée au secteur d'anneau 40 est comprise entre 1/10 et 2/5. La longueur circonférentielle I₃ de la deuxième portion latérale 35 est identique à celle de la première portion latérale 33.

La première région de raccordement 30a permet ainsi de réduire l'intensité des efforts de traction exercés sur les secteurs d'anneau 40, tout en réduisant les fuites entre le rebord aval 28 et les secteurs d'anneaux 40.

La portion centrale 31 et les portions latérales 33, 35 de chacune des bordures circonférentielles de la première région de raccordement 30a permettent de réduire l'intensité maximale des efforts mécaniques qui sont exercés par le carter de support 20 sur les secteurs d'anneau 40, tout en limitant les fuites d'air à la jonction entre le secteur d'anneau 40 et le carter de support 20. La masse du carter de support 20 est également limitée, en étant notamment sensiblement identique à celle d'un carter de support 20 avec une première région de raccordement 30a uniforme selon la direction circonférentielle C-C.

Bien entendu, diverses modifications peuvent être apportées par l'homme du métier à l'invention qui vient d'être décrite sans sortir du cadre de l'exposé de l'invention.

Le carter de support 20 peut être utilisé pour raccorder des aubes de rotor de turbine basse pression 10 au carter de turbine 11.

La forme du carter de support 20 est variable. Par exemple, le carter de support 20 peut être non symétrique autour de son axe longitudinal X-X. Il peut aussi s'étendre sur une distance angulaire inférieure à 360° autour de son axe longitudinal X-X, en étant sectorisé.

La forme de la première région de raccordement 30a est variable. En particulier, la forme de chaque portion centrale 31 peut varier, de même que sa longueur I₁ et sa hauteur h par rapport aux portions latérales 33, 35. De même, la forme de chacune des portions latérales 33, 35 peut varier, de même que leur longueur I₂, I₃ et leur profondeur. La forme, la longueur et la profondeur de la deuxième portion latérale 35 peuvent varier par rapport à celles de la première portion latérale 33 de la bordure circonférentielle.

## Revendications

1. Carter de support (20) pour secteur d'anneau d'étanchéité (40) de turbomachine, comprenant :
un corps (22) annulaire autour d'un axe longitudinal (X-X) du carter, comprenant une surface interne (S₂) et une surface externe (S₁) opposée à la surface interne qui s'étendent axialement le long de l'axe longitudinal (X-X),
un rebord aval (28) configuré pour la fixation du secteur d'anneau (40), le rebord aval (28) s'étendant depuis le corps (22) radialement vers l'intérieur du carter (20) et circonférentiellement le long d'une région de jonction (30) du corps à un distributeur,
la région de jonction (30) comprenant une première région de raccordement (30a) configurée pour raccorder le corps (22) au rebord aval (28) et une deuxième région de raccordement (30b) configurée pour être fixée au distributeur,
**caractérisé en ce que** la première région de raccordement (30a) comprend, selon une direction circonférentielle (C-C) du carter relativement à son axe longitudinal (X-X), au moins une portion centrale (31) et deux portions latérales (33, 35) qui sont situées de part et d'autre de la portion centrale (31),
la portion centrale (31) s'étendant depuis la surface externe (Si) en étant en saillie vers l'extérieur du carter (20) par rapport aux portions latérales (33, 35).

2. Carter (20) selon la revendication précédente, dans lequel au moins une des portions latérales (33, 35) comprend un évidement de la surface externe (S₁) du corps.

3. Carter (20) selon l'une quelconque des revendications précédentes, dans lequel la portion centrale (31) comprend une portion en saillie de la surface externe (S₁) du corps, la portion en saillie comprenant de préférence un bossage.

4. Carter (20) selon l'une quelconque des revendications précédentes, comprenant un rebord amont (24) de fixation du secteur d'anneau (40), le rebord amont (24) s'étendant depuis le corps (22) radialement vers l'intérieur du carter (20) et circonférentiellement le long du corps (22),
la deuxième région de raccordement (30b) comprenant un bord aval de fixation (37) qui est situé en aval de la portion centrale (31) et des portions latérales (33, 35), pour fixer le carter (20) au distributeur.

5. Carter (20) selon l'une quelconque des revendications précédentes, dans lequel la hauteur (h) maximale de saillie de la portion centrale (31) par rapport à au moins une des portions latérales (33, 35) est comprise entre 3 mm et 30 mm, et/ou dans lequel
la longueur circonférentielle (I₁) de la portion centrale (31) par rapport à la longueur circonférentielle (L) d'un secteur d'anneau (40) est comprise entre 1/5 et 4/5, et/ou dans lequel
la longueur circonférentielle (I₂, I₃) d'au moins une des portions latérales (33, 35) par rapport à la longueur circonférentielle (L) d'un secteur d'anneau (40) est comprise entre 1/10 et 2/5.

6. Carter (20) selon l'une quelconque des revendications précédentes, dans lequel la région de jonction (30) est sensiblement symétrique par rapport à un plan médian (P) de coupe longitudinale du carter de support (20), le carter de support (20) étant de préférence sensiblement symétrique par rapport au plan médian (P).

7. Carter (20) selon l'une quelconque des revendications précédentes, dans lequel le rebord aval (28) comprend une lèvre (28a) destinée à être en contact avec une patte aval (44) du secteur d'anneau (40).

8. Ensemble d'anneau de turbine comprenant un carter (20) selon l'une quelconque des revendications précédentes et un secteur d'anneau (40) qui est fixé au carter (20),
le secteur d'anneau (40) comprenant une patte amont (42) qui est fixée au rebord amont (24) du carter de support (20) et une patte aval (44) qui est fixée au rebord aval (28) du carter de support (20), de préférence par des pions (19a, 19b),
le carter de support (20) étant de préférence réalisé dans un matériau métallique et le secteur d'anneau (40) étant de préférence réalisé dans un matériau composite à matrice céramique.

9. Ensemble d'anneau selon la revendication précédente, comprenant une pluralité de secteurs d'anneaux (40) adjacents les uns des autres selon la direction circonférentielle (C-C) et fixés au carter de support (20),
la première région de raccordement (30a) comprenant selon la direction circonférentielle (C-C) autant de portions centrales (31) que l'ensemble comprend de secteurs d'anneau (40), chaque portion centrale (31) étant située circonférentiellement entre deux portions latérales (33, 35),
chaque portion centrale (31) étant en saillie radialement vers l'extérieur du carter (20) par rapport aux portions latérales (33, 35) qui sont adjacentes à cette portion centrale (31) selon la direction circonférentielle (C-C).

10. Turbine (8, 10) pour turbomachine, comprenant un ensemble d'anneau selon la revendication 8 ou 9, la turbine (8, 10) étant de préférence une turbine haute pression (8), un distributeur haute pression étant de préférence fixé mécaniquement au carter de support (20) en amont du secteur d'anneau (40).

## Patentansprüche

1. Trägergehäuse (20) für ein Dichtringsegment (40) für ein Turbotriebwerk, das Folgendes umfasst:
einen ringförmigen Körper (22) um eine Längsachse (X-X) des Gehäuses herum, der eine Innenfläche (S₂) und eine der Innenfläche gegenüberliegende Außenfläche (S₁) umfasst, die sich axial entlang der Längsachse (X-X) erstrecken,
eine nachgelagerte Randleiste (28), die so konfiguriert ist, dass sie das Ringsegment (40) fixiert, wobei sich die nachgelagerte Randleiste (28) vom Körper (22) aus radial in Richtung des Inneren des Gehäuses (20) und umlaufend entlang eines Bereichs der Verbindung (30) des Körpers mit einem Stator erstreckt,
wobei der Verbindungsbereich (30) einen ersten Verbindungsabschnitt (30a) umfasst, der so konfiguriert ist, dass er den Körper (22) mit der nachgelagerten Randleiste (28) verbindet, sowie einen zweiten Verbindungsabschnitt (30b), der dafür vorgesehen ist, am Stator befestigt zu werden,
**dadurch gekennzeichnet, dass** der erste Verbindungsabschnitt (30a) in umlaufender Richtung (C-C) des Gehäuses relativ zu dessen Längsachse (X-X) mindestens einen zentralen Abschnitt (31) und zwei auf beiden Seiten des zentralen Abschnitts (31) angeordnete Seitenabschnitte (33, 35) umfasst,
wobei sich der zentrale Abschnitt (31) von der Außenfläche (S₁) aus erstreckt und relativ zu den Seitenabschnitten (33, 35) in Richtung des Äußeren des Gehäuses (20) hervorragt.

2. Gehäuse (20) gemäß dem vorstehenden Anspruch, bei dem mindestens einer der Seitenabschnitte (33, 35) eine Aussparung der Außenfläche (S₁) des Körpers umfasst.

3. Gehäuse (20) gemäß einem der vorstehenden Ansprüche, bei dem der zentrale Abschnitt (31) einen über die Außenfläche (S₁) des Körpers herausragenden Abschnitt enthält, wobei der herausragende Abschnitt vorzugsweise einen Dorn umfasst.

4. Gehäuse (20) gemäß einem der vorstehenden Ansprüche, das eine vorgelagerte Randleiste (24) zur Befestigung des Ringsegments (40) umfasst, wobei sich die vorgelagerte Randleiste (24) vom Körper (22) aus radial in Richtung des Inneren des Gehäuses (20) und umlaufend entlang des Körpers (22) erstreckt,
wobei der zweite Verbindungsabschnitt (30b) eine nachgelagerte Befestigungskante (37) umfasst, die dem zentralen Abschnitt (31) und den Seitenabschnitten (33, 35) nachgelagert ist und für die Befestigung des Gehäuses (20) am Stator vorgesehen ist.

5. Gehäuse (20) gemäß einem der vorstehenden Ansprüche, bei dem die maximale Höhe (h) des Hervorragens des zentralen Abschnitts (31) über mindestens einen der Seitenabschnitte (33, 35) zwischen 3 mm und 30 mm beträgt und/oder bei dem
die Umlauflänge (k) des zentralen Abschnitts (31) zwischen 1/5 und 4/5 der Umlauflänge (L) eines Ringsegments (40) beträgt und/oder bei dem
die Umlauflänge (b, b) von mindestens einem der Seitenabschnitte (33, 35) zwischen 1/10 und 2/5 der Umlauflänge (L) eines Ringsegments (40) beträgt.

6. Gehäuse (20) gemäß einem der vorstehenden Ansprüche, bei dem der Verbindungsbereich (30) im Wesentlichen symmetrisch zu einer Mittelebene (P) eines Längsprofils des Trägergehäuses (20) ist, wobei das Trägergehäuse (20) vorzugsweise im Wesentlichen symmetrisch zu der Mittelebene (P) ist.

7. Gehäuse (20) gemäß einem der vorstehenden Ansprüche, bei dem die nachgelagerte Randleiste (28) eine Lippe (28a) umfasst, die dafür vorgesehen ist, eine nachgelagerte Lasche (44) des Ringsegments (40) zu berühren.

8. Turbinenringkonstruktion, die ein Gehäuse (20) gemäß einem der vorstehenden Ansprüche und ein an dem Gehäuse (20) befestigtes Ringsegment (40) umfasst,
wobei das Ringsegment (40) eine vorgelagerte Lasche (42) umfasst, die an der vorgelagerten Randleiste (24) des Trägergehäuses (20) befestigt ist, sowie eine nachgelagerte Lasche (44), die an der nachgelagerten Randleiste (28) des Trägergehäuses (20) befestigt ist, vorzugsweise mit Zapfen (19a, 19b),
wobei das Trägergehäuse (20) vorzugsweise aus einem metallischen Werkstoff gefertigt ist und das Ringsegment (40) vorzugsweise aus einem keramischen Faserverbundwerkstoff gefertigt ist.

9. Ringkonstruktion gemäß dem vorstehenden Anspruch, die eine Vielzahl von in umlaufender Richtung (C-C) nebeneinander angeordneten Ringsegmenten (40) umfasst, welche am Trägergehäuse (20) befestigt sind,
wobei der erste Verbindungsabschnitt (30a) in umlaufender Richtung (C-C) so viele zentrale Abschnitte (31) umfasst, wie die Konstruktion Ringsegmente (40) umfasst, wobei jeder zentrale Abschnitt (31) in umlaufender Richtung zwischen zwei Seitenabschnitten (33, 35) angeordnet ist,
wobei der zentrale Abschnitt (31) relativ zu den Seitenabschnitten (33, 35), die in umlaufender Richtung (C-C) neben diesem zentralen Abschnitt (31) angeordnet sind, radial in Richtung des Äußeren des Gehäuses (20) hervorragt.

10. Turbine (8, 10) für ein Turbotriebwerk, die eine Ringkonstruktion gemäß Anspruch 8 oder 9 umfasst, wobei die Turbine (8, 10) vorzugsweise eine Hochdruckturbine (8) ist und dem Ringsegment (40) vorgelagert vorzugsweise ein Hochdruckstator mechanisch am Trägergehäuse (20) befestigt ist.

## Claims

1. A support case (20) for turbomachine sealing ring sector (40), comprising:
an annular body (22) which is annular around a longitudinal axis (X-X) of the support case, wherein the annular body (22) comprises an internal surface (S₂) and an external surface (S₁) which is opposite the internal surface, and wherein the internal surface (S₂) and the external surface (S₁) extend axially along the longitudinal axis (X-X),
a downstream edge (28) configured for attachment of the ring sector (40), wherein the downstream edge (28) extends from the annular body (22) radially towards the inside of the support case (20) and circumferentially along a junction region (30) between the annular body and a guide vane assembly,
wherein the junction region (30) comprises a first connection region (30a) configured to connect the annular body (22) to the downstream edge (28), and wherein the junction region (30) comprises a second connection region (30b) configured to be fixed to the guide vane assembly,
wherein the first connection region (30a) comprises at least one central portion (31) and two lateral portions (33, 35) which are located on each side of the central portion (31), along a circumferential direction (C-C) of the support case about the longitudinal axis (X-X) of the support case,
wherein the central portion (31) extends from the external surface (S₁) by projecting outwards from the support case (20) with respect to the lateral portions (33, 35).

2. The support case (20) according to the preceding claim, wherein at least one of the lateral portions (33, 35) comprises a recess in the external surface (Si) of the annular body.

3. The support case (20) according to any one of the preceding claims, wherein the central portion (31) comprises a projecting portion projecting from the external surface (Si) of the annular body, wherein the projecting portion preferably comprises a boss.

4. The support case (20) according to any one of the preceding claims, comprising an upstream edge (24) for attachment of the ring sector (40), wherein the upstream edge (24) extends from the annular body (22) radially towards the inside of the support case (20), and wherein the upstream edge (24) extends from the annular body (22) circumferentially along the annular body (22),
wherein the second connection region (30b) comprises a downstream attachment edge (37) to fix the support case to the guide vanes assembly, wherein the downstream attachment edge (37) is located downstream from the central portion (31) and from the lateral portions (33, 35).

5. The support case (20) according to any one of the preceding claims, wherein the maximum projection height (h) of the central portion (31) projecting above at least one of the lateral portions (33, 35) is between 3 mm and 30 mm, and/or
wherein the circumferential length I₁ of the central portion (31) with respect to the circumferential length (L) of a ring sector (40) is between 1/5 and 4/5, and/or
wherein the circumferential length (I₂, I₃) of at least one lateral portion (33, 35) with respect to the circumferential length (L) of a ring sector (40) is between 1/10 and 2/5.

6. The support case (20) according to any one of the preceding claims, wherein the junction region (30) is substantially symmetric about a median longitudinal section plane (P) of the support case (20), wherein the support case (20) is preferably substantially symmetric about the median plane (P).

7. The support case (20) according to any one of the preceding claims, wherein the downstream edge (28) comprises a lip (28a) which is configured to be in contact with a downstream leg (44) of the ring sector (40).

8. A turbine ring assembly comprising a support case (20) according to any one of the preceding claims and a ring sector (40) that is fixed to the support case (20), wherein the ring sector (40) comprises an upstream leg (42) and a downstream leg (44), wherein the upstream leg (42) is fixed to the upstream edge (24) of the support case (20) and wherein the downstream leg (44) is fixed to the downstream edge (28) of the support case (20), preferably by studs (19a, 19b),
wherein the support case (20) is preferably made from a metallic material and wherein the ring sector is preferably made from a ceramic matrix composite material.

9. The turbine ring assembly according to the preceding claim, comprising a plurality of ring sectors (40) adjacent to each other around the circumferential direction (C-C) and fixed to the support case (20),
wherein the first connection region (30a) comprises one central portion (31) along the circumferential direction (C-C) for each ring sector (40), wherein each central portion (31) is circumferentially located between two lateral portions (33, 35),
wherein each central portion (31) projects radially outwards from the case (20) with respect to the lateral portions (33, 35) that are adjacent to this central portion (31) along the circumferential direction (C-C).

10. A turbine (8, 10) for turbomachine, comprising a ring assembly according to claim 8 or 9, wherein the turbine (8, 10) is preferably a high pressure turbine (8), wherein a high pressure guide vane assembly is preferably fixed to the support case (20) upstream from the ring sector (40).
